# EUROPEAN PATENT APPLICATION

(11) **EP 4 759 656 A1**
(43) Date of publication of application: **17.06.2026**
(21) Application number: 24217173.4
(22) Date of filing: 03.12.2024

(54) **METHOD FOR CONTROLLING A VEHICLE AT RAILWAY CROSSINGS**

(71) Applicant: Robert Bosch GmbH, 70442 Stuttgart (DE)
(72) Inventor: Erostyak, Janos, 7632 Pecs (HU)

(57) **Abstract**

The invention concerns a method for controlling a vehicle which can determine if the vehicle is located on a railway crossing and depending on the vehicle's speed or driving direction generate actions. The method comprises the steps to determine if the vehicle is located on a railway crossing; determine if the vehicle speed is below a threshold or if the vehicle is reversing; based on the combined outcome of the determinations, generate a vehicle control signal and/or generate a user information output. The invention further concerns a vehicle control system and an advanced driver assistance system.

## Description

The invention concerns a method for controlling a vehicle, wherein the method can determine if the vehicle is located on a railway crossing and depending on the vehicle's speed or driving direction generate actions. The invention further concerns a vehicle control system and an advanced driver assistance system.

### Prior Art

Modern advanced driver assistance systems (ADAS) are designed to improve road safety by supporting drivers through real-time reactions to environmental conditions. Key features in many of these systems is road sign recognition and determining the vehicle position. Another feature that is implemented in many modern vehicles is a start-stop functionality, which turns of the vehicle's engine in the case of short stops during the driving process, for examples, in congested traffic conditions.

With the increasing prevalence of advanced driver assistance systems (ADAS), particularly driven by the upcoming 2024 EU General Safety Regulation that mandates their inclusion in all new cars, there is a growing opportunity to improve ADAS.

Railway crossings present significant risks, particularly in slow-moving traffic where vehicles may come to a stop on the tracks without the driver being immediately aware of the danger. Also crossing railway crossings with a slow speed can cause dangerous situations, moreover so reversing on a railway crossing. In some countries, traffic regulations abide the driver to cross railway crossing at minimum speeds and prohibits stopping or reversing on railway crossings.

### Disclosure of the invention

It is therefore a task to overcome these deficits and provide a system and a method which improves crossing a railway crossing with a vehicle and implements safety mechanisms.

These tasks are solved by the method of claim 1, the vehicle control system according to claim 8 and the advanced driver assistance system according to claim 9. Advantageous embodiments and further modifications of the invention are defined by the dependent claims.

The inventive method for controlling a vehicle with start-stop functionality comprises the steps to determine if the vehicle is located on a railway crossing; determine if the vehicle speed is below a threshold or if the vehicle is reversing; based on the combined outcome of the determinations, generate a vehicle control signal and/or generate a user information output.

The inventive method implements safety mechanisms, that allow the detection of dangerous situations while crossing a railway crossing. If the vehicle speed drives slow, risk of collisions with trains or other railway crossing components such as crossing gates is increased by elongating the time needed to cross the railway. The same is true for reversing on a railway crossing. The presence of this risk factors allows triggering defined actions to reduce the imminent dangers. The method may only determine if the vehicle speed is below a threshold or if the vehicle is reversing in case the determination if the vehicle is located on a railway crossing comes out as true. In other words, it may only check vehicle speed and the driving direction which corresponds to reversing, if the vehicle is located on a railway crossing. This reduces necessary computing capacities, reduces cost for components running the method and facilitates execution of the method.

The vehicle speed may be zero which corresponds a stop of the vehicle. Thus, the threshold may be set to determine if the vehicle has stopped. Reversing may be detected by the gear the vehicle has engaged, for example it may be detected by a signal of the vehicle corresponding to an engaged reverse gear.

According to an embodiment of the method, if the vehicle includes a start-stop functionality and is located on a railway crossing and if the vehicle speed is below a threshold or if the vehicle is reversing, the vehicle control signal disables the start-stop functionality.

The start-stop functionality may turn of the vehicle's engine in case it comes to a stop on the railway crossing. For example, in congested traffic conditions the vehicle may come to a stop on the railway crossing, prompting the start-stop functionality to turn off the engine. The stop may even be mediated by an adaptive cruise control system, stopping the vehicle due to an reduced distance of a vehicle travelling in front which may have stopped behind the railway crossing. In this situation, where the vehicle is stopped on the railway crossing, disabling the start-stop functionality ensures that the vehicle's engine is kept on, allowing the driver to quickly react to an emerging dangerous situation without any delay caused by turning the engine on first.

According to an embodiment of the method, if the vehicle is located on a railway crossing, and if the vehicle speed is below a threshold or if the vehicle is reversing, the user information output informs the user of a potentially dangerous or of a dangerous situation.

The user information output may be a visual, haptic and/or auditory signal. This allows the user to become aware of the potentially dangerous or dangerous situation and react accordingly.

According to an embodiment of the method, generating the vehicle control signal and the user information output is further based on the determination of an approaching train and/or by closing crossing gates.

An approaching train or closing crossing gates pose an imminent dangerous situation, wherein the vehicle is either not able to leave the railway crossing due to closed crossing gates or risks collision with the approaching train. By basing the generation of the vehicle control signal and the user information output also on such a determination allows not only to alert the user when an imminent dangerous situation occurs, but also allows to generate a different vehicle control signal and a different user information output alerting the user of the imminent danger. This determination may be enabled by the vehicle's sensors such as video, lidar or radar sensors.

According to an embodiment of the method, the determination if the vehicle is located on a railway crossing is based on road sign recognition.

The vehicle's sensors may detect a road sign and a road sign recognition functionality may recognize a railway crossing sign. Road sign recognition may also recognize that the vehicle is located in between two railway crossing signs, for example either left and right of the vehicle or in front and back of the vehicle, both indicating that the vehicle is located on the railway crossing. As described, road sign recognition is a feature of most modern vehicles, simplifying the execution of the method on a vehicle.

According to an embodiment of the method, the railway crossing sign recognition uses image data to detect a railway crossing sign. The image data may be recorded by the vehicle's image sensors such as video sensors.

According to an embodiment of the method, the determination if the vehicle is located on a railway crossing is based on a vehicle position and map data.

The vehicle's position may be determined in relation to the map data. The vehicle's position may be determined by a vehicle's sensor which may be a global positioning sensor. The method may determine if the vehicle is located on a railway crossing by comparing a vehicle's current position to the map data and determining that the vehicle's position is on a railway crossing recorded in the map data.

The invention further concerns a vehicle control system, including a start-stop functionality, a vehicle sensor, a position sensor, a memory and a controller; wherein the vehicle control system is configured to execute the method of any of the preceding embodiments.

The vehicle sensor may be an image sensor configured for road sign detection and the controller may be configured for road sign recognition. The position sensor may be a global positioning sensor, the memory may be configured to store map data and output from the vehicle sensor and the position sensor. The controller may be configured to control the vehicle and generate a vehicle control signal and a user information output. The controller may be configured to control the start-stop functionality of the vehicle.

The invention further concerns an advanced driver assistance system, wherein the advanced driver assistance system is configured to execute the method according to any of the preceding embodiments.

The described embodiments are not limited to their individual features but may be combined, if technically possible and in the scope of the claims.

In the following, preferred embodiments of the invention are described based on the figures.
- Fig. 1: shows a situation wherein a vehicle is located on a railway crossing and the vehicle is equipped with a system according to an embodiment of the invention;
- Fig. 2: shows the steps of the method according to an embodiment of the invention;
- Fig. 3: shows the steps of the method according to another embodiment of the invention;
- Fig. 4: shows an embodiment of a system according to the invention.

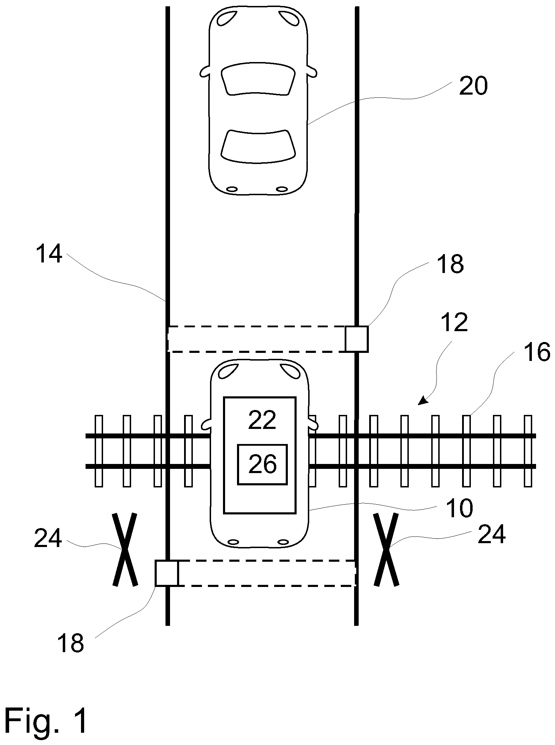

In the exemplary situation of fig. 1 the vehicle 10 is located on a track 14. The track 14 crosses the railway crossing 12. The vehicle 10 is located on the railway crossing 12.

In this situation, a number of dangers may occur. First, the vehicle speed may be slow, which prolongs the time needed to cross the railway crossing 12. This in turn increases the risk of a train approaching on the railway tracks 16, creating a collision risk. Moreover, if the railway crossing 12 is equipped with crossing gates 18, the closing crossing gates 18 may trap the vehicle 10 on the railway crossing 12, leaving no space for evasive maneuvers. The vehicle 10 may also stop on the railway crossing 12. For example, the vehicle may be equipped with an adaptive cruise control system (ACC) that keeps the distance to another vehicle 20 located in front of the vehicle 10. If the vehicle 20 comes to a stop due to traffic conditions or other factors, the ACC of the vehicle 10 may stop it on the railway crossing 12. If the vehicle 10 comes to a stop and includes a start-stop functionality, the vehicle's engine may be turned off by the start-stop functionality. This poses the risk that the driver, when becoming aware of the potentially or actually dangerous situation, may not be able to react in time as the vehicle's engine has to be turned on first.

If the vehicle 10 is equipped with a system 22 according to the invention and/or executes the method according to the invention, the dangerous situation may be detected and corresponding measures may be taken. The system 22 may be a vehicle control system of the vehicle 10 or may be an advanced driver assistance system (ADAS) of the vehicle 10.

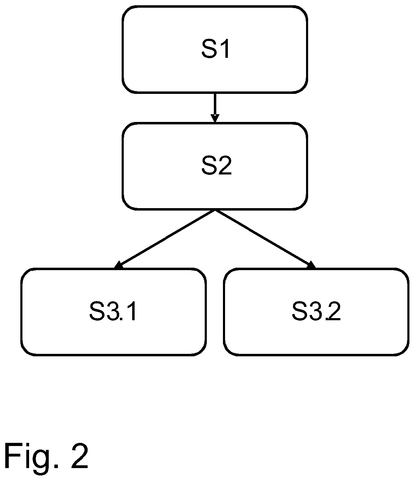

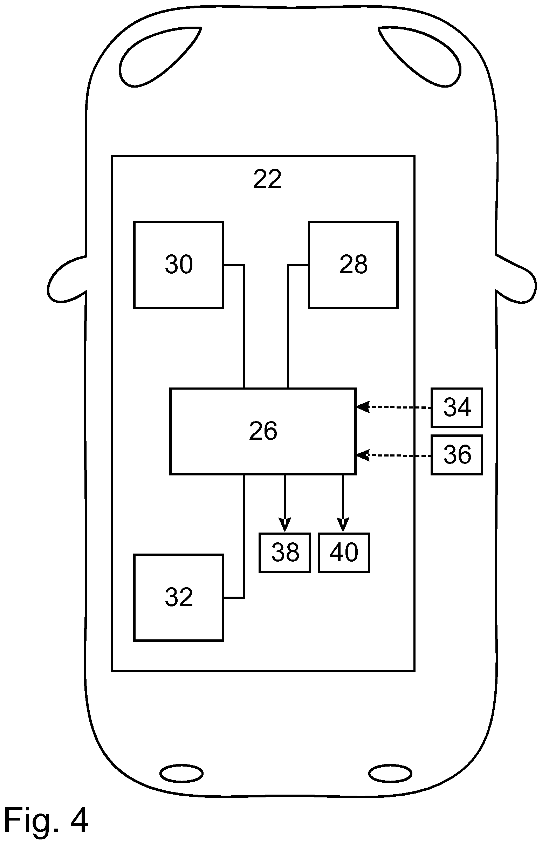

Fig. 2 shows the steps of the method according to an embodiment of the invention and will be described in regard to the exemplary situation of fig. 1 and an exemplary system 22 of the invention according to an embodiment as shown in fig. 4. In step S1, it is determined if the vehicle 10 is located on the railway crossing 12.

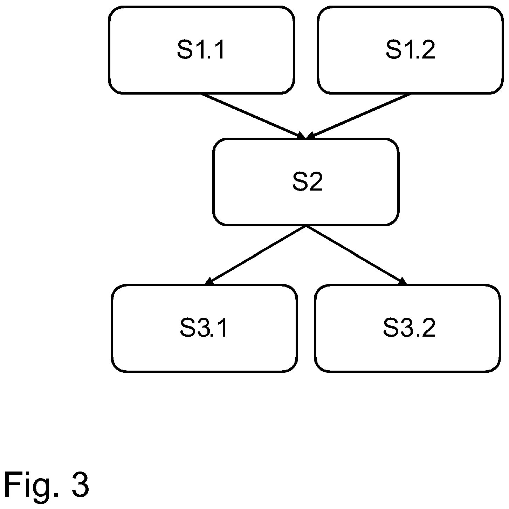

This may be achieved by different possibilities as shown in another embodiment of the method of fig. 3. In step S1.1 it may be determined if the vehicle 10 is located on the railway crossing 12 by road sign recognition. The vehicle 10 may be equipped with the system 22 shown in fig. 4 that executes the method. In the following, the method and the system 22 are described in relation to each other, but the invention is not limited thereto but may include only the method as defined by the claims. The system 22 includes a vehicle sensor 28, which may be an image sensor and is configured to detect road signs. In this case, the sensor 28 detects the railway crossing signs 24. In the exemplary situation of fig. 1, these are located on both sides of the track 14 before the railway crossing 12. The sensor 28 may detect the location of the signs 24 in relation to the vehicle 10. A controller 26 of the system 22 may recognize the signs 24 as railway crossing signs and - depending on the position of the signs 24 in relation to the vehicle 10 - may determine that the vehicle 10 is located on the railway crossing 12. Additionally or alternatively, the crossing gates 18 may be detected and recognized to determine the vehicle's location on the railway crossing 12.

In step S2.2 which may be executed additionally or alternatively to step S1.1, the vehicle's location on the railway crossing 12 is determined by a position sensor 30 of the system 22. The position sensor 30, such as a global positioning sensor, may detect the vehicle's location and provide it to the controller 26. The controller 26 is also connected to a memory 32 of the system 22 which stores map data. The map data includes records of the locations of railway crossings and by comparing the vehicle's location to the map data, the controller 26 determines if the vehicle 10 is located on the railway crossing 12. Alternatively to the memory 32 including map data, the controller 26 may access a connection component which accesses server based map data for location comparison.

In step S2 of figs. 2 and 3, it is determined if a condition is satisfied that relates to a potentially dangerous situation. Such a condition is the vehicle speed. As described above, low vehicle speed relates to an increased occurrence of a dangerous situation. The vehicle speed may be provided as signal 34 by the vehicle 10 to the system 22. A threshold may be set to define a speed that relates an increased occurrence of a dangerous situation. As described, the speed may be zero, defining a stop of the vehicle 10. Another condition is the vehicle's driving direction. If the vehicle 10 is reversing, the driver may not recognize the danger of the situation or a see signal indicating an approaching train. If the controller 26 detects a reverse driving direction, e.g. mediated by a signal 36 of the vehicle 10 indicating an engaged reverse gear, the controller 26 may determine the possible occurrence of a potentially dangerous situation. Additionally, in step S2 the controller 26 may determine if a train is approaching and/or the crossing gates 24 are closing as described above. This also relates to a dangerous situation.

If the controller 26 determines the location of the vehicle10 on the railway crossing 12 in steps S1, S1.1 or S1.2 and if any of the described conditions is satisfied that relates to the potential occurrence of a dangerous situation, the controller 26 executes any or both of the steps S3.1 and S3.2.

The controller 26 generates a vehicle control signal 38 in step S3.1. The vehicle 10 may include a start-stop functionality. This poses additional risks as described before. The vehicle control signal 38 may disable the start-stop functionality, preventing the deactivation of the vehicle's engine. The vehicle control signal 38 may effect further actions. For example, if the vehicle 10 includes an ADAS with a self-driving functionality such as ACC, the vehicle control signal 38 may cause the ACC to drive the vehicle 10 off the railway crossing 12, for example by reducing the set minimal distance of the vehicle 10 to the vehicle 20.

In step S3.2, the controller 26 generates a user information output 40 which is provided to the driver of the vehicle 10. This alerts the driver of the potentially dangerous situation and allows the driver to drive the vehicle 10 off the railway crossing 12. This ensures the attention of the driver is brought to the fact that the vehicle 10 is located on the railway crossing 12 while any of the described conditions are satisfied.

By executing the method of figs. 2 or 3 and by the system 22, the risk of a dangerous situation while crossing a railway crossing 12 is significantly reduced. The method and the system require components already included in many modern vehicles, allowing cheap and facilitated setup of the system 22 or the execution of the method on many modern vehicles.

The method is not limited to the embodiments as described but covers all embodiments in the scope of the claims.

## Claims

1. Method for controlling a vehicle (10), comprising the steps to
determine if the vehicle (10) is located on a railway crossing (12);
determine if the vehicle speed is below a threshold or if the vehicle (10) is reversing;
based on the combined outcome of the determinations, generate a vehicle control signal (38) and/or generate a user information output (40).

2. Method according to claim 1,
wherein if the vehicle (10) includes a start-stop functionality and is located on a railway crossing (12), and if the vehicle speed is below a threshold or if the vehicle (10) is reversing, the vehicle control signal (38) disables the start-stop functionality.

3. Method according to any of the preceding claims,
wherein if the vehicle (10) is located on a railway crossing (12), and if the vehicle speed is below a threshold or if the vehicle (10) is reversing, the user information output (40) informs the user of a potentially dangerous situation.

4. Method according any of the preceding claims,
wherein generating the vehicle control signal (38) and the user information output (40) is further based on the determination of an approaching train and/or closing crossing gates (18).

5. Method according to any of the preceding claims,
wherein the determination if the vehicle (10) is located on a railway crossing (12) is based on road sign recognition.

6. Method according to claim 5,
wherein the road sign recognition uses image data to detect a railway crossing sign (24).

7. Method according to any of the preceding claims,
wherein the determination if the vehicle (10) is located on a railway crossing (12) is based on a vehicle position and map data.

8. Vehicle control system (22),
including a vehicle sensor (28), a position sensor (30), a memory (32) and a controller (26);
wherein the vehicle control system (22) is configured to execute the method of any of the claims 1 to 7.

9. Advanced driver assistance system,
wherein the advanced driver assistance system is configured to execute the method according to any of the claims 1 to 7.
